# EUROPÄISCHE PATENTANMELDUNG

(11) **EP 2 224 297 A1**
(43) Veröffentlichungstag der Anmeldung: **01.09.2010**
(21) Anmeldenummer: 09002831.7
(22) Anmeldetag: 27.02.2009
(51) Int. Cl.: G05B 19/042, G05B 19/418

(54) **Verfahren zur konsistenten Bereitstellung von Konfigurationsdaten in einem mehrere vernetzte Steuerungseinheiten umfassenden industriellen Automatisierungssystem und industrielles Automatisierungssystem**

(71) Anmelder: Siemens Aktiengesellschaft, 80333 München (DE)
(72) Erfinder: Brunner, Felix, 8045 Zürich (CH)

(57) **Zusammenfassung**

Zur konsistenten Bereitstellung von Konfigurationsdaten in einem mehrere vernetzte Steuerungseinheiten umfassenden industriellen Automatisierungssystem werden Komponenten eines Dienstes über eine einheitliche Konfigurationsschnittstelle durch eine lokale Dienstkonfigurationseinheit zu einem Dienst verknüpft. Dienste werden mittels Konfigurationsdaten konfiguriert und aktiviert, wobei die Konfigurationsdaten Informationen zur Zuordnung von Diensten zu Steuerungseinheiten und zu Abhängigkeiten zwischen Diensten umfassen. Die Konfigurationsdaten werden durch einen Systemkonfigurationsdienst von einer Steuerungs- und Überwachungseinheit des Automatisierungssystems übernommen, überprüft und an Ziel-Steuerungseinheiten übermittelt. Die übermittelten Konfigurationsdaten werden durch den Ziel-Steuerungseinheiten zugeordnete lokale Dienstkonfigurationseinheiten auf Änderungen im Vergleich zu bisher verwendeten Konfigurationsdaten überprüft. Die lokalen Dienstkonfigurationseinheiten ermitteln anhand festgestellter Änderungen der Konfigurationsdaten Listen von Operationen zur Durchführung von Konfigurationsänderungen, wobei die Listen auf eine Minimierung von Dienstausfallzeiten optimiert sind.

## Beschreibung

Industrielle Automatisierungssysteme dienen zur Überwachung, Steuerung und Regelung von technischen Prozessen, insbesondere im Bereich Fertigungs- und Prozeßautomatisierung, und ermöglichen einen Betrieb von Maschinen und industriellen Anlagen, der möglichst selbständig und unabhängig von menschlichen Eingriffen erfolgen soll. Aufgrund einer ständig steigenden Bedeutung von Informationstechnik für Automatisierungssysteme, die zahlreiche vernetzte Rechnereinheiten umfassen, gewinnen Verfahren zur zuverlässigen Konfigurierung und Aktivierung von verteilten Diensten für eine Bereitstellung von Überwachungs-, Steuerungs- und Regelungsfunktionen verstärkt an Bedeutung.

Entsprechend bisherigen Lösungsansätzen werden Konfigurationsdaten in verteilten Automatisierungssystemen durch gerätespezifische Konfigurierungssysteme bereitgestellt und für eine Aktivierung eines lokalen Dienstes verwendet. Zudem erfolgt auf eine Bereitstellung von Konfigurationsdaten bisher ohne weitere Überprüfung eine umgehende Aktivierung des jeweiligen lokalen Dienstes. Bei verteilten Diensten, deren Dienstkomponenten durch mehrere unterschiedliche Rechnereinheiten bereitgestellt werden, kann eine unkoordinierte Konfigurierung und Aktivierung von Einzelsystemen zu problematischen Inkonsistenzen führen, welche die fehlerfreie Bereitstellung eines Dienstes gefährden und sich nachteilig auf Systemstabilität und -verfügbarkeit auswirken.

Der vorliegenden Erfindung liegt daher die Aufgabe zugrunde, ein Verfahren zur konsistenten Bereitstellung von Konfigurationsdaten in einem mehrere vernetzte Steuerungseinheiten umfassenden industriellen Automatisierungssystem anzugeben, das eine zuverlässige Bereitstellung von verteilten Diensten ermöglicht, sowie ein zur Durchführung des Verfahrens geeignetes Automatisierungssystem zu schaffen.

Diese Aufgabe wird erfindungsgemäß durch ein Verfahren mit den in Anspruch 1 angegebenen Merkmalen und durch ein Automatisierungssystem mit den in Anspruch 13 angegebenen Merkmalen gelöst. Vorteilhafte Weiterbildungen der vorliegenden Erfindung sind in den abhängigen Ansprüchen angegeben.

Entsprechend dem erfindungsgemäßen Verfahren werden Funktionen eines mehrere vernetzte Steuerungseinheiten umfassenden Automatisierungssystems durch Dienste von den Steuerungseinheiten bereitgestellt bereitgestellt. Die Steuerungseinheiten sind vorzugsweise programmierbar. Ferner kann das Automatisierungssystem beispielsweise ein Fertigungs-, Prozeß- oder Gebäudeautomatisierungssystem sein. Komponenten eines Dienstes werden über eine einheitliche Konfigurationsschnittstelle durch eine lokale Dienstkonfigurationseinheit zu einem Dienst verknüpft. Die Dienste werden mittels Konfigurationsdaten konfiguriert und aktiviert. Die Konfigurationsdaten umfassen Informationen zur Zuordnung von Diensten zu bereitstellenden Rechnereinheiten und zu Abhängigkeiten zwischen Diensten. Die Konfigurationsdaten werden durch einen Systemkonfigurationsdienst von einer Steuerungs- und Überwachungseinheit des Automatisierungssystems übernommen, überprüft und an Ziel-Steuerungseinheiten übermittelt.

Die Steuerungs- und Überwachungseinheit kann beispielsweise ein Engineering-System zur Konfiguration, Wartung, Inbetriebnahme und/oder Dokumentation des Automatisierungssystems sein. Die übermittelten Konfigurationsdaten werden durch den Ziel- Steuerungseinheiten zugeordnete lokale Dienstkonfigurationseinheiten auf Änderungen im Vergleich zu bisher verwendeten Konfigurationsdaten überprüft. Die lokalen Dienstkonfigurationseinheiten ermitteln anhand festgestellter Änderungen der Konfigurationsdaten Listen von Operationen zur Durchführung von Konfigurationsänderungen. Dabei sind die Listen von Operationen auf eine Minimierung von Dienstausfallzeiten optimiert. Die lokalen Dienstkonfigurationseinheiten führen die ermittelten Operationen zur Übernahme von Konfigurationsänderungen lokaler Dienste durch bzw. veranlassen deren Durchführung. Auf diese Weise ermöglicht das erfindungsgemäße Verfahren eine zuverlässige und konsistente Konfigurierung und Aktivierung von Diensten in einem Automatisierungssystem. Insbesondere durch eine ausfallzeitenoptimierte Ermittlung von Operationen zur Übernahme von Konfigurationsänderungen können Dienste und Dienstkomponenten, die durch eine Konfigurationsänderung nicht beeinflußt sind, während einer Durchführung von Konfigurationsänderungen voll funktionsfähig bleiben.

Bei einer bevorzugten Ausgestaltung der vorliegenden Erfindung werden für eine Aktivierung eines lokalen Dienstes in einer Vorbereitungsphase zunächst die Konfigurationsdaten geladen. Der lokale Dienst wird dann in einer Abschlußphase unter Verwendung der in der Vorbereitungsphase geladenen Konfigurationsdaten bereitgestellt. Bei einem Fehlschlagen der Vorbereitungs- bzw. Abschlußphase wird der lokale Dienst, der beispielsweise auf mehrere Steuerungseinheiten verteilte Dienstkomponenten umfassen kann, in einer Zurücksetzphase unter Verwendung von Konfigurationsdaten bereitgestellt, die einem letzten fehlerfreien Status zugeordnet sind. Auf diese Weise kann insbesondere ein partielles Fehlschlagen einer Übernahme geänderter Konfigurationsdaten nicht zu Dienstfehlfunktionen aufgrund einer inkonsistenten Dienstkonfiguration führen.

Vorteilhafterweise werden zur Laufzeit benötigte Konfigurationsdaten durch die Dienstkonfigurationseinheiten bereitgestellt. Auf diese Weise ist insbesondere bei einem Ausfall des Systemkonfigurationsdienstes weiterhin eine Bereitstellung von lokalen Diensten möglich, denen eine aktivierte störungsfreie Dienstkonfigurationseinheit zugeordnet ist.

Die Konfigurationsdaten können für sämtliche Steuerungseinheiten des Automatisierungssystems in einer zentralen Datenbank gespeichert werden, während die Konfigurationsdaten für eine ausgewählte Steuerungseinheit in einer der ausgewählten Steuerungseinheit zugeordneten lokalen Datenbank gespeichert werden können. Dies ermöglicht einen zuverlässigen Zugriff auf Konfigurationsdaten. Vorteilhafterweise umfassen die zentrale Datenbank und lokale Datenbanken den jeweiligen Konfigurationsdaten zugeordnete Versionstabellen, die miteinander abgeglichen werden. Auf diese Weise können auch unterschiedliche Versionsstände von Konfigurationsdaten sicher und effizient verwaltet werden.

Ein Zugriff auf Konfigurationsdaten für einen lokalen Dienst kann wahlweise durch einen globalen Konfigurierungs- und Aktivierungsdienst oder eine dem lokalen Dienst zugeordnete lokale Dienstkonfigurationseinheit verfügbar gemacht werden. Vorzugsweise wird der Zugriff auf Konfigurationsdaten für einen lokalen Dienst bei einem Ausfall der dem lokalen Dienst zugeordneten Dienstkonfigurationseinheit durch den globalen Konfigurierungs- und Aktivierungsdienst verfügbar gemacht. Dies ermöglicht einerseits eine schnelle und effiziente Verteilung von Konfigurationsdaten an Ziel-Steuerungseinheiten über diesen zugeordnete Dienstkonfigurationseinheiten und anderseits eine erhöhte Ausfallsicherheit durch Rückgriff auf den globalen Konfigurierungs- und Aktivierungsdienst.

Dienste des Automatisierungssystems werden bevorzugt innerhalb einer dienstorientierten Architektur durch die Steuerungseinheiten bereitgestellt. Dienstorientierte bzw. serviceorientierte Architekturen (SOA) zielen darauf ab, Dienste in komplexen Organisationseinheiten zu strukturieren und für eine Vielzahl von Nutzern verfügbar zu machen. Dabei werden beispielsweise vorhandene Komponenten eines Datenverarbeitungssystems, wie Programme, Datenbanken, Server oder Websites, so koordiniert, daß von den Komponenten bereitgestellte Leistungen zu Diensten zusammen gefaßt und berechtigten Nutzern zur Verfügung gestellt werden. Serviceorientierte Architekturen ermöglichen eine Anwendungsintegration, indem Komplexität einzelner Teilkomponenten eines Datenverarbeitungssystems hinter standardisierten Schnittstellen verborgen wird. Hieraus resultiert eine besonders sichere und flexible Bereitstellung einer Steuerungsinformation für ein rechnerbasiertes Objekt in einem Automatisierungssystem.

Das erfindungsgemäße Automatisierungssystem umfaßt mehrere über ein Kommunikationsnetz miteinander verbundene Steuerungseinheiten zur Bereitstellung von Funktionen des Automatisierungssystems als Dienste. Die Dienste sind mittels Konfigurationsdaten konfigurierbar und aktivierbar. Dabei sind Komponenten eines Dienstes über eine einheitliche Konfigurationsschnittstelle durch eine lokale Dienstkonfigurationseinheit zu einem Dienst verknüpfbar. Außerdem ist eine Steuerungs- und Überwachungseinheit zur Bereitstellung von Konfigurationsdaten vorgesehen, die Informationen zur Zuordnung von Diensten zu Steuerungseinheiten und zu Abhängigkeiten zwischen Diensten umfassen. Des weiteren weist das erfindungsgemäße Automatisierungssystem eine Rechnereinheit zur Bereitstellung eines Systemkonfigurationsdienstes für eine Übernahme der Konfigurationsdaten von der Steuerungs- und Überwachungseinheit sowie für eine Überprüfung und Weiterleitung der Konfigurationsdaten an Ziel-Steuerungseinheiten auf.

Darüber hinaus ist zumindest eine zu einer Ziel-Steuerungseinheit zugeordnete lokale Dienstkonfigurationseinheit vorgesehen. Die lokale Dienstkonfigurationseinheit dient einer Überprüfung übermittelter Konfigurationsdaten auf Änderungen im Vergleich zu bisher verwendeten Konfigurationsdaten und einer Ermittlung von Listen von Operationen zur Durchführung von Konfigurationsänderungen anhand festgestellter Änderungen der Konfigurationsdaten. Dabei sind die Listen von Operationen auf eine Minimierung von Dienstausfallzeiten optimiert. Außerdem dient die lokale Dienstkonfigurationseinheit einer Durchführung und/oder Veranlassung der ermittelten Operationen zur Übernahme von Konfigurationsänderungen lokaler Dienste.

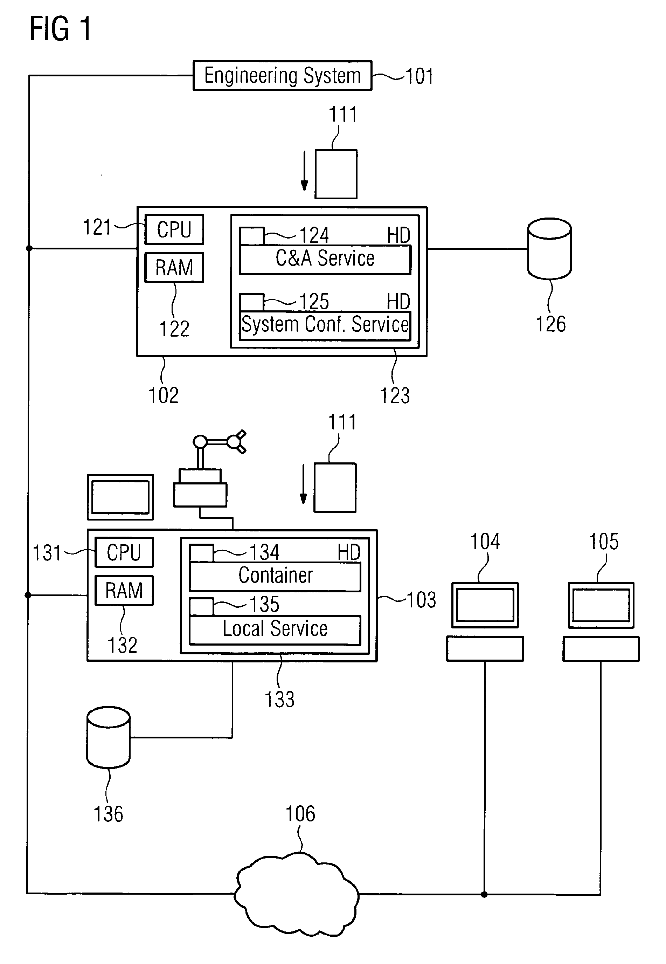

Die Erfindung wird nachfolgend an einem Ausführungsbeispiel anhand der Zeichnung näher erläutert. Es zeigt
- Figur 1: eine schematische Darstellung eines Automatisie- rungssystems mit mehreren über ein Kommunikations- netz miteinander verbundenen Steuerungseinheiten,
- Figur 2: ein Diagramm zu einem Austausch von Meldungen für eine Bereitstellung von Konfigurationsdaten an Ziel-Rechnereinheiten und Aktivierung von lokalen Diensten anhand der bereitgestellten Konfigurati- onsdaten.

Das in der Figur dargestellte Automatisierungssystem umfaßt ein Engineering-System 101, eine Rechnereinheit 102 und mehrere programmierbare Steuerungseinheiten 103-105, die als Netzknoten über ein Kommunikationsnetz 106 miteinander verbunden sind. Die Steuerungseinheiten 103-105 stellen Funktionen des Automatisierungssystems als lokale Dienste bereit, die mittels Konfigurationsdaten konfiguriert und aktiviert werden.

Das Engineering-System 1 dient zur Konfiguration, Wartung, Inbetriebnahme und Dokumentation des Automatisierungssystems und stellt Konfigurationsdaten 111 bereit. Die Konfigurationsdaten 111 umfassen Informationen zur Zuordnung von Diensten zu Steuerungseinheiten 103-105 und zu Abhängigkeiten zwischen Diensten. Die Konfigurationsdaten 111 werden an die Rechnereinheit 102 übermittelt und durch einen von der Rechnereinheit 102 bereitgestellten globalen Konfigurations- und Aktivierungsdienst bzw. durch einen Systemkonfigurationsdienst überprüft und an die jeweilige Steuerungseinheit 103-105 weitergeleitet.

Die Systemkonfigurationsdaten 111 werden durch den Steuerungseinheiten 103-105 zugeordnete lokale Dienstkonfigurationseinheiten auf Änderungen im Vergleich zu bisher verwendeten Konfigurationsdaten überprüft. Die lokalen Dienstkonfigurationseinheiten dienen außerdem einer Verknüpfung von Komponenten eines Dienstes zu einem Dienst über eine einheitliche Konfigurationsschnittstelle. Anhand festgestellter Änderungen der Konfigurationsdaten ermitteln die lokalen Dienstkonfigurationseinheiten Listen von Operationen zur Durchführung von Konfigurationsänderungen. Dabei sind die Listen von Operationen im Hinblick auf eine Minimierung von Dienstausfallzeiten optimiert. Abschließend führen die lokalen Dienstkonfigurationseinheiten die ermittelten Operationen zur Übernahme von Konfigurationsänderungen lokaler Dienste durch bzw. veranlassen deren Durchführung. Durch die Durchführung der ermittelten Operationen erfolgt insbesondere eine Bereitstellung von Ressourcen, die für eine Aktivierung lokaler Dienste benötigt werden. Darüber hinaus werden durch die lokalen Dienstkonfigurationseinheiten zur Laufzeit der lokalen Dienste benötigte Konfigurationsdaten bereitgestellt.

Die Rechnereinheit 102 und die Steuerungseinheiten 103-105 umfassen zumindest jeweils einen Prozessor 121, 131, einen Arbeitsspeicher 122, 132 und eine Festplatte 123, 133 zur nichtflüchtigen Speicherung von Programmcode, Anwendungsdaten und Benutzerdaten. Auf der Festplatte 123 der Rechnereinheit 102 ist Programmcode 124 zur Bereitstellung des globalen Konfigurierungs- und Aktivierungsdienstes und Programmcode 125 zur Bereitstellung des Systemkonfigurationsdienstes gespeichert. Des weiteren ist auf der Festplatte 133 einer Steuerungseinheit 103 Programmcode 134 zur Implementierung einer lokalen Dienstkonfigurationseinheit sowie Programmcode 135 zur Bereitstellung eines lokalen Dienstes gespeichert. Der lokale Dienst dient im vorliegenden Ausführungsbeispiel beispielsweise zur Ansteuerung meßtechnischer oder aktorischer Peripherie, wie Sensoren oder Roboter. Der auf den Festplatten 123, 133 gespeicherte Programmcode 124, 125, 134, 135 ist in den Arbeitsspeicher 122, 132 der Rechnereinheit 102 und der Steuerungseinheit 103 ladbar und durch den jeweiligen Prozessor 121, 131 zur Bereitstellung obiger Dienste ausführbar.

Die Konfigurationsdaten 111 für sämtliche durch die Steuerungseinheiten 103-105 bereitgestellten lokalen Dienste werden in einer globalen Datenbank 126 der Rechnereinheit 102 gespeichert. Zusätzlich werden Konfigurationsdaten aus Redundanz- und Performanzgründen für einen ausgewählten lokalen Dienst in einer lokalen Datenbank 136 einer Steuerungseinheit 103 gespeichert, die dem ausgewählten lokalen Dienst zugeordnet ist. Ein Zugriff auf Konfigurationsdaten für einen lokalen Dienst kann sowohl durch den globalen Konfigurierungs- und Aktivierungsdienst als auch durch eine lokale Dienstkonfigurationseinheit verfügbar gemacht werden. Vorzugsweise wird der Zugriff auf Konfigurationsdaten für einen lokalen Dienst bei einem Ausfall der jeweiligen lokalen Dienstkonfigurationseinheit durch den globalen Konfigurierungs- und Aktivierungsdienst verfügbar gemacht.

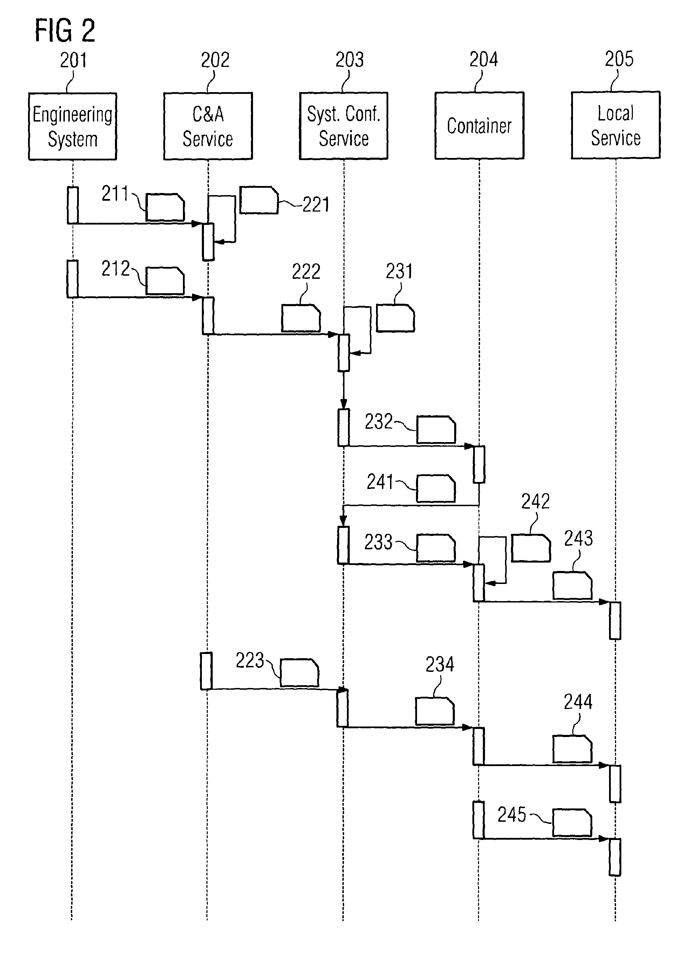

Entsprechend Figur 2 wird zur Bereitstellung der Konfigurationsdaten zunächst eine Meldung 211 mit den bereitzustellenden Konfigurationsdaten vom Engineering-System 201 an den globalen Konfigurierungs- und Aktivierungsdienst 202 übermittelt. Anschließend wird durch den globalen Konfigurierungs- und Aktivierungsdienst 202 eine Konsistenzüberprüfung der übermittelten Konfigurationsdaten durchgeführt. Bei erfolgreicher Konsistenzüberprüfung wird per Meldung 221 eine Speicherung der Konfigurationsdaten durch den globalen Konfigurierungs- und Aktivierungsdienst 202 veranlaßt. Die in Figur 2 dargestellten Meldungen umfassen auch zwischen computerbasierten Objekten eines Laufzeitsystems ausgetauschte interne Meldungen zur Initiierung von Funktionsaufrufen.

Bei erfolgreicher Speicherung der Konfigurationsdaten durch den globalen Konfigurierungs- und Aktivierungsdienst 202 übermittelt das Engineering-System 201 eine Meldung 212 zur Aktivierung einer geänderten Konfiguration an den globalen Konfigurierungs- und Aktivierungsdienst 202. Der globale Konfigurierungs- und Aktivierungsdienst 202 übermittelt daraufhin eine Meldung 222 an den Systemkonfigurationsdienst 203 zur Einleitung einer Vorbereitungsphase für eine Übernahme geänderter Konfigurationsdaten. Mittels einer Meldung 231 wird anschließend ein Lesen der geänderten Konfigurationsdaten durch den Systemkonfigurationsdienst 203 veranlaßt.

Bei erfolgreichem Lesen der geänderten Konfigurationsdaten durch den Systemkonfigurationsdienst 203 wird eine Meldung 232 zur Einleitung einer Vorbereitungsphase für eine geänderter Konfigurationsdaten vom Systemkonfigurationsdienst 203 an die einem umzukonfigurierenden lokalen Dienst 205 zugeordnete Dienstkonfigurationseinheit 204 übermittelt. Hierauf fragt die Dienstkonfigurationseinheit 204 mittels einer Meldung 241 die geänderten Konfigurationsdaten vom Systemkonfigurationsdienst 203 ab. Der Systemkonfigurationsdienst 203 übermittelt darauf eine die geänderten Konfigurationsdaten umfassende Meldung 233 an die Dienstkonfigurationseinheit 204.

Nach Übermittlung der geänderten Konfigurationsdaten an die Dienstkonfigurationseinheit 204 wird mittels einer Meldung 242 eine Überprüfung der geänderten Konfigurationsdaten durch die Dienstkonfigurationseinheit 204 auf Änderungen im Vergleich zu bisher verwendeten Konfigurationsdaten veranlaßt. Die Dienstkonfigurationseinheit 204 ermittelt dabei anhand festgestellter Änderungen der Konfigurationsdaten Listen von Operationen zur Durchführung von Konfigurationsänderungen. Anschließend veranlaßt die Dienstkonfigurationseinheit 204 mittels einer Meldung 243 an den umzukonfigurierenden lokalen Dienst 205 ein Starten im Rahmen einer Umkonfigurierung neu hinzukommender Dienstkomponenten. Bei einem erfolgreichen Starten der neu hinzukommenden Dienstkomponenten ist die Vorbereitungsphase vollständig abgeschlossen, und der globale Konfigurierungs- und Aktivierungsdienst 202 wird hierüber benachrichtigt. In Figur 2 ist dies nicht explizit dargestellt.

Nach erfolgreichem Abschluß der Vorbereitungsphase übermittelt der globale Konfigurierungs- und Aktivierungsdienst 202 zur Einleitung einer Abschlußphase bzw. Commit-Phase eine Meldung 223 an den Systemkonfigurationsdienst 203. Der Systemkonfigurationsdienst 203 veranlaßt anschließend die Dienstkonfigurationseinheit 204 mittels einer Meldung 234 zur Bereitstellung des umzukonfigurierenden lokalen Dienstes 205 in einer Abschlußphase unter Verwendung in der Vorbereitungsphase geladener Konfigurationsdaten und der ermittelten Operationen zur Durchführung von Konfigurationsänderungen. Die Dienstkonfigurationseinheit 204 übermittelt darauf eine Meldung 244 an den umzukonfigurierenden lokalen Dienst 205 zum Stoppen im Rahmen der Umkonfigurierung nicht mehr benötigter Dienstkomponenten. Anschließend wird mittels einer Meldung 245 von der Dienstkonfigurationseinheit 204 an den umzukonfigurierenden lokalen Dienst 205 ein Laden der geänderten Konfigurationsdaten und eine Durchführung der in der Vorbereitungsphase ermittelten Operationen veranlaßt. Bei erfolgreicher Beendigung der Abschlußphase benachrichtigt die Dienstkonfigurationseinheit 204 den globalen Konfigurierungs- und Aktivierungsdienst 202 mittels einer in Figur 2 nicht explizit dargestellten, über den Systemkonfigurationsdienst weitergeleiteten Meldung.

Bei einem Fehlschlagen der Vorbereitungs- oder Abschlußphase wird der lokale Dienst 205 in einer Zurücksetzphase unter Verwendung von einem letzten fehlerfreien Status zugeordneten Konfigurationsdaten bereitgestellt. Dies erfolgt anhand von Versionsinformationen, die für Konfigurationsdaten in Versionstabellen gespeichert sind. Diese Versionsinformationen können vorteilhafterweise in der globalen Datenbank 126 der Rechnereinheit 102 für einen Abgleicht gespeichert werden.

Die Anwendung der vorliegenden Erfindung ist nicht auf das beschriebene Ausführungsbeispiel beschränkt.

## Patentansprüche

1. Verfahren zur konsistenten Bereitstellung von Konfigurationsdaten in einem mehrere vernetzte Steuerungseinheiten umfassenden industriellen Automatisierungssystem, bei dem
- Funktionen des Automatisierungssystems durch Dienste von den Steuerungseinheiten bereitgestellt werden,
- Komponenten eines Dienstes über eine einheitliche Konfigurationsschnittstelle durch eine lokale Dienstkonfigurationseinheit zu einem Dienst verknüpft werden,
- Dienste mittels Konfigurationsdaten konfiguriert und aktiviert werden, wobei die Konfigurationsdaten Informationen zur Zuordnung von Diensten zu Steuerungseinheiten und zu Abhängigkeiten zwischen Diensten umfassen,
- die Konfigurationsdaten durch einen Systemkonfigurationsdienst von einer Steuerungs- und Überwachungseinheit des Automatisierungssystems übernommen, überprüft und an Ziel-Steuerungseinheiten übermittelt werden,
- die übermittelten Konfigurationsdaten durch den Ziel-Steuerungseinheiten zugeordnete lokale Dienstkonfigurationseinheiten auf Änderungen im Vergleich zu bisher verwendeten Konfigurationsdaten überprüft werden,
- die lokalen Dienstkonfigurationseinheiten anhand festgestellter Änderungen der Konfigurationsdaten Listen von Operationen zur Durchführung von Konfigurationsänderungen ermitteln, wobei die Listen auf eine Minimierung von Dienstausfallzeiten optimiert sind,
- die lokalen Dienstkonfigurationseinheiten die ermittelten Operationen zur Übernahme von Konfigurationsänderungen lokaler Dienste durchführen und/oder veranlassen.

2. Verfahren nach Anspruch 1,
bei dem für eine Aktivierung eines lokalen Dienstes in einer Vorbereitungsphase zunächst die Konfigurationsdaten geladen und der lokale Dienst in einer Abschlußphase unter Verwendung der in der Vorbereitungsphase geladenen Konfigurationsdaten bereitgestellt wird, und bei dem der lokale Dienst bei einem Fehlschlagen der Vorbereitungs- und/oder Abschlußphase in einer Zurücksetzphase unter Verwendung von einem letzten fehlerfreien Status zugeordneten Konfigurationsdaten bereitgestellt wird.

3. Verfahren nach Anspruch 2,
bei dem der lokale Dienst auf mehrere Steuerungseinheiten verteilte Dienstkomponenten umfaßt.

4. Verfahren nach einem der Ansprüche 1 bis 3,
bei dem zur Laufzeit benötigte Konfigurationsdaten durch die lokalen Dienstkonfigurationseinheiten bereitgestellt werden.

5. Verfahren nach einem der Ansprüche 1 bis 4,
bei dem die Konfigurationsdaten für sämtliche Steuerungseinheiten des Automatisierungssystems in einer zentralen Datenbank gespeichert werden, und bei dem die Konfigurationsdaten für eine ausgewählte Steuerungseinheit in einer der ausgewählten Steuerungseinheit zugeordneten lokalen Datenbank gespeichert werden.

6. Verfahren nach Anspruch 5,
bei dem die zentrale Datenbank und lokale Datenbanken den jeweiligen dort gespeicherten Konfigurationsdaten zugeordnete Versionstabellen umfassen, die miteinander abgeglichen werden.

7. Verfahren nach einem der Ansprüche 1 bis 6,
bei dem ein Zugriff auf Konfigurationsdaten für einen lokalen Dienst wahlweise durch einen globalen Konfigurierungs- und Aktivierungsdienst oder eine lokale Dienstkonfigurationseinheit verfügbar gemacht wird.

8. Verfahren nach Anspruch 7,
bei dem der Zugriff auf Konfigurationsdaten für einen lokalen Dienst bei einem Ausfall der dem lokalen Dienst zugeordneten lokalen Dienstkonfigurationseinheit durch den globalen Konfigurierungs- und Aktivierungsdienst verfügbar gemacht wird.

9. Verfahren nach einem der Ansprüche 1 bis 8,
bei dem Dienste des Automatisierungssystems innerhalb einer dienstorientierten Architektur durch die Steuerungseinheiten bereitgestellt werden.

10. Verfahren nach einem der Ansprüche 1 bis 9,
bei dem die Steuerungs- und Überwachungseinheit ein Engineering-System zur Konfiguration, Wartung, Inbetriebnahme und/oder Dokumentation des Automatisierungssystems ist.

11. Verfahren nach einem der Ansprüche 1 bis 10,
bei dem das Automatisierungssystem ein Fertigungs-, Prozeß- oder Gebäudeautomatisierungssystem ist.

12. Verfahren nach einem der Ansprüche 1 bis 11,
bei dem die Steuerungseinheiten programmierbar sind.

13. Industrielles Automatisierungssystem mit
- mehreren über ein Kommunikationsnetz miteinander verbundenen Steuerungseinheiten zur Bereitstellung von Funktionen des Automatisierungssystems als Dienste, die mittels Konfigurationsdaten konfigurierbar und aktivierbar sind, wobei Komponenten eines Dienstes über eine einheitliche Konfigurationsschnittstelle durch eine lokale Dienstkonfigurationseinheit zu einem Dienst verknüpfbar sind,
- einer Steuerungs- und Überwachungseinheit zur Bereitstellung von Konfigurationsdaten, die Informationen zur Zuordnung von Diensten zu Steuerungseinheiten und zu Abhängigkeiten zwischen Diensten umfassen,
- einer Rechnereinheit zur Bereitstellung eines Systemkonfigurationsdienstes für eine Übernahme der Konfigurationsdaten von der Steuerungs- und Überwachungseinheit sowie für eine Überprüfung und Weiterleitung der Konfigurationsdaten an Ziel-Steuerungseinheiten,
- zumindest einer zu einer Ziel-Steuerungseinheit zugeordneten lokalen Dienstkonfigurationseinheit für
- eine Überprüfung übermittelter Konfigurationsdaten auf Änderungen im Vergleich zu bisher verwendeten Konfigurationsdaten,
- eine Ermittlung von Listen von Operationen zur Durchführung von Konfigurationsänderungen anhand festgestellter Änderungen der Konfigurationsdaten und
- eine Durchführung und/oder Veranlassung der ermittelten Operationen zur Übernahme von Konfigurationsänderungen lokaler Dienste,
wobei die Listen von Operationen auf eine Minimierung von Dienstausfallzeiten optimiert sind.
